(19) Europäisches Patentamt
European Patent Office
Office européen des brevets

(11) **EP 4 624 866 A1**

(12) **EUROPEAN PATENT APPLICATION**

(43) Date of publication:
**01.10.2025 Bulletin 2025/40**

(21) Application number: **25159633.4**

(22) Date of filing: **24.02.2025**

(51) International Patent Classification (IPC):
**G01C 3/08** (2006.01)  **G01C 3/12** (2006.01)
**G01C 3/14** (2006.01)  **G01S 17/86** (2020.01)
**G06T 7/246** (2017.01)

(52) Cooperative Patent Classification (CPC):
**G01C 3/085; G01C 3/14; G01S 17/86; G06T 7/55;**
G06T 2207/30252

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 JP 2024050588**

(71) Applicant: **CANON KABUSHIKI KAISHA**
**Tokyo 146-8501 (JP)**

(72) Inventor: **OIGAWA, Makoto**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **DISTANCE-ACQUISITION INFORMATION PROCESSING APPARATUS AND CONTROL METHOD THEREOF**

(57) First distance information including an error about a distance between an imaging unit and an object via an optical system is acquired, second distance information including an error that is less than the error included in the first distance information is acquired, based on a ratio between a first defocus amount corresponding to deviation along an optical axis between a sensor plane and an image plane, the first defocus amount having been used for acquisition of the first distance information, and a second defocus amount used for acquisition of the second distance information, a first correction value is generated to correct the first defocus amount and the distance between the imaging unit and the object is calculated by using the first defocus amount corrected with the first correction value.

## FIG.1

**Description**

BACKGROUND

Field of the disclosure

The present invention relates to an apparatus having a ranging function that is used in a digital camera, a digital video camera, an on-board sensor device, a robot vision sensor device, for example, and to a control method of the apparatus.

Description of the Related Art

A device with a ranging function that calculates parallax of an object based on images captured from different points of view and acquires distance information, for example, about the distance to the object or about a defocus state from the calculated parallax has been proposed as an imaging device. An example of the imaging device is a stereo camera including at least two cameras. Another example of the imaging device is a ranging camera including a single camera using a pupil division imaging plane phase difference method in which a parallax image is acquired by receiving light fluxes, each of which has passed through a different pupil region of an optical system.

Imaging devices having such a ranging function as described above are affected by an ambient environment, such as heat or a shock, and the value of the baseline length changes, which leads to occurrence of a temporal ranging error. Japanese Patent Application Laid-Open Publication No. 2014-52335 discusses a technique in which expansion coefficients with respect to the temperature of a jig maintaining a camera interval, which is the baseline length of a stereo camera, are acquired and stored in advance, change in ambient temperature is acquired, and an amount of change in the length of the jig, that is, an amount of change in baseline length, is calculated and corrected.

However, the correction using the technique discussed in Japanese Patent Application Laid-Open Publication No. 2014-52335 is applicable to stereo cameras whose baseline length is defined by a physical length, which is the camera interval, and the correction is inapplicable to ranging cameras based on the pupil division imaging plane phase difference method. This is because in the case of a ranging camera based on the pupil division imaging plane phase difference method, the baseline length is not a physical spatial distance, but is defined by the interval between pupil regions through which the individual light fluxes pass.

SUMMARY

In view of the above described issue, the present invention is directed to providing an apparatus capable of reducing a temporal ranging error that occurs in an information processing apparatus capable of acquiring distance information from captured images.

According to a first aspect of the present invention, there is provided an information processing apparatus as specified in claim 1. Optional features of the first aspect as specified in claims 2 to 8. According to a second aspect of the present invention, there is provided an information processing apparatus as specified in claim 9. Optional features of the second aspect are specified in or derivable from claims 2 to 8. According to a third aspect of the present invention, there is provided a moving apparatus as specified in claim 10. Optional features of the third aspect are specified in or derivable from claims 2 to 8. According to a fourth aspect of the present invention, there is provided an information processing method as specified in claim 11. Optional features of the fourth aspect are specified in or derivable from claims 2 to 8. According to a fifth aspect of the present invention, there is provided a storage medium as specified in claim 12. Optional features of the fifth aspect are specified in or derivable from claims 2 to 8.

Further features of the present disclosure will become apparent from the following description of embodiments with reference to the attached drawings.

BRIEF DESCRIPTION OF THE DRAWINGS

Fig. 1 is a diagram illustrating a configuration example of a distance acquisition apparatus.
Figs. 2A to 2C are diagrams illustrating details of a camera device, an image sensor, and a unit pixel, respectively.
Figs. 3A and 3B are diagrams each illustrating a relationship between the unit pixel and an exit pupil.
Figs. 4A to 4C are diagrams each schematically illustrating the image sensor and an image formation optical system.
Figs. 5A and 5B are diagrams each illustrating a relationship between a parallax amount and a defocus amount.
Figs. 6A to 6C are diagrams each illustrating acquisition of distance information by using a Structure from Motion (SfM) method.

Figs. 7A to 7D are diagrams each illustrating generation of correction information based on defocus amounts.

Figs. 8A to 8D are flowcharts each illustrating a processing procedure.

Fig. 9 is a diagram illustrating a relationship between the parallax amount and the defocus amount.

Figs. 10A to 10D are diagrams each illustrating generation of correction information based on defocus amounts.

Fig. 11 is a flowchart illustrating a processing procedure.

Figs. 12A and 12B are diagrams each illustrating an example of a vehicle in which the distance acquisition apparatus is mounted.

## DESCRIPTION OF THE EMBODIMENTS

The present disclosure will be described in detail with reference to embodiments and drawings, and the present disclosure is not limited to the contents described in the embodiments. The embodiments may be appropriately combined. That is to say one or more features of one embodiment may be combined with one or more features of another embodiment unless expressly stated otherwise. Each embodiment of the present invention described below can be implemented solely or as a combination of elements or features from individual embodiments in a single embodiment is beneficial. In the description with reference to the drawings, even if the drawing number are different, the same reference numerals are given to the same portions in principle, and the redundant description will be omitted.

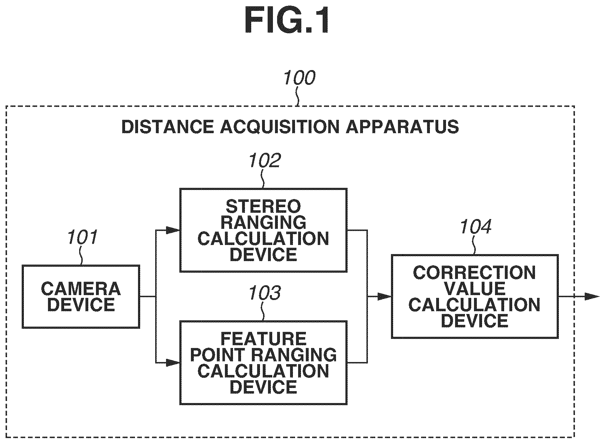

A first embodiment will be described. Fig. 1 illustrates a configuration example of a distance acquisition apparatus 100. In the following description, the distance acquisition apparatus 100 is an information processing apparatus that acquires a distance. The distance acquisition apparatus 100 includes a camera device 101, a stereo ranging calculation device 102, a feature point ranging calculation device 103, and a correction value calculation device 104. The camera device 101 may be configured as an external device of the distance acquisition apparatus 100.

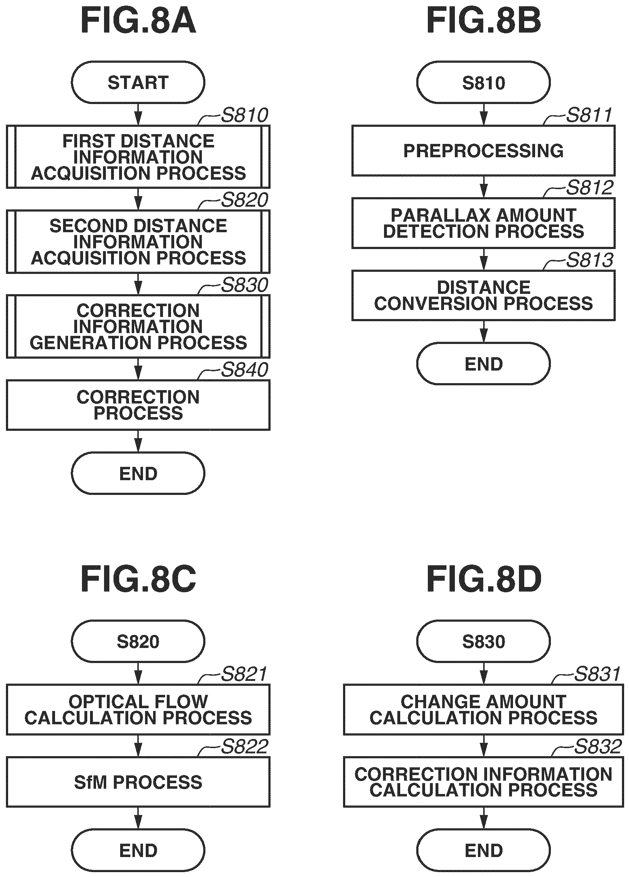

In first distance information acquisition processing illustrated in Figs. 8A to 8D, the stereo ranging calculation device 102 executes calculation on image signals acquired by the camera device 101, and acquires the distance from the camera device 101 to an object (first distance information). In second distance information acquisition processing, the feature point ranging calculation device 103 executes calculation on the image signals acquired by the camera device 101, and acquires the distance from an imaging unit of the camera device 101 to the object (second distance information). Based on the acquired first distance information and second distance information, the correction value calculation device 104 calculates a correction value, and outputs a range value after a correction of a temporal ranging error based on the calculated correction value. Hereinafter, the distance between the camera device 101 and the object will be referred to as "object distance", as appropriate.

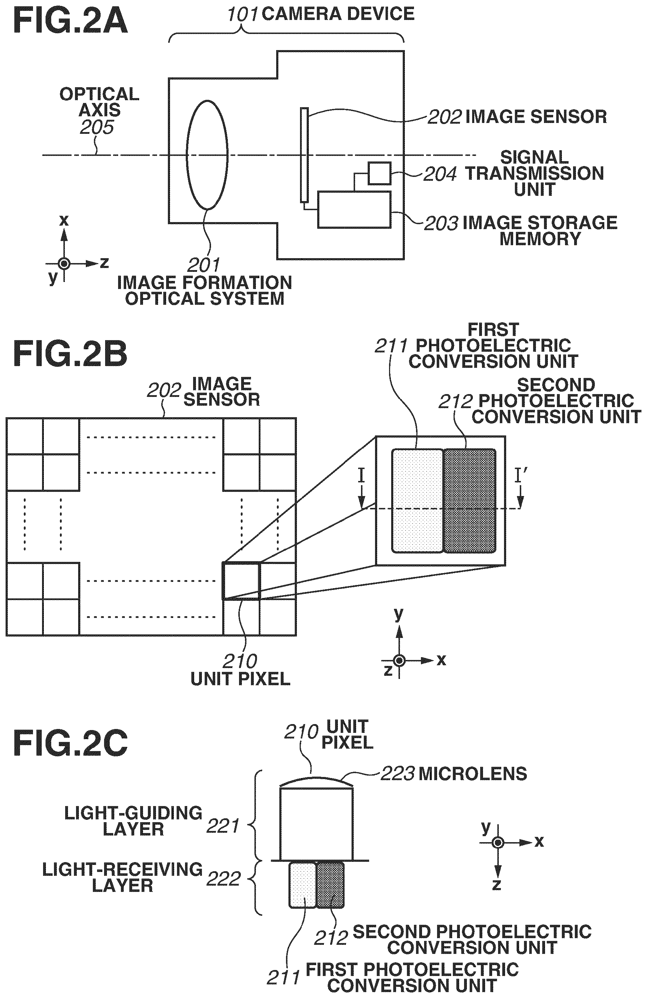

The camera device 101, which is a ranging camera based on a pupil division imaging plane phase difference method, will be described with reference to Figs. 2A to 2C. Fig. 2A illustrates a configuration of the camera device 101. The camera device 101 includes an optical system 201, an image sensor 202, an image storage memory 203, and a signal transmission unit 204.

An image signal is obtained by executing photoelectric conversion on an object image formed on the image sensor 202 via the optical system 201. The acquired image signal is stored in the image storage memory 203, and is transmitted to the outside of the camera device 101 by the signal transmission unit 204. In the present embodiment, a z-axis is parallel to an optical axis 205 of the image formation optical system 201, and that an x-axis and a y-axis are perpendicular to each other and to the optical axis 205.

The image sensor 202 acquires a pair of images captured from different points of view (hereinafter referred to as "parallax image"). Details of the image sensor 202 are illustrated in Fig. 2B. Fig. 2B is an xy cross section of the image sensor 202.

The image sensor 202 is configured with a plurality of unit pixels 210 arranged in the x and y directions.

Each of the unit pixels 210 has, in its light-receiving layer, two photoelectric conversion units which are a first photoelectric conversion unit 211 and a second photoelectric conversion unit 212. Fig. 2C schematically illustrates a sectional view of the unit pixel 210 taken along a line I-I' in Fig. 2B. Each unit pixel 210 includes a light-guiding layer 221 and a light-receiving layer 222. The light-guiding layer 221 includes a microlens 223 for efficiently guiding the light flux that has entered the unit pixel to the corresponding photoelectric conversion units 211 and 212, a color filter (not illustrated) for allowing light of a band of a predetermined wavelength to pass through it, and wiring (not illustrated) for image reading and pixel driving, for example. The light-receiving layer 222 includes two photoelectric conversion units, which are the first photoelectric conversion unit 211 and the second photoelectric conversion unit 212, for executing photoelectric conversion on the received light. With the image sensor 202 having the unit pixel configuration as described above, i.e., the configuration including the single image formation optical system 201 and the single image sensor 202, a parallax image formed by a pair of a first image and a second image captured from different points of view is obtained.

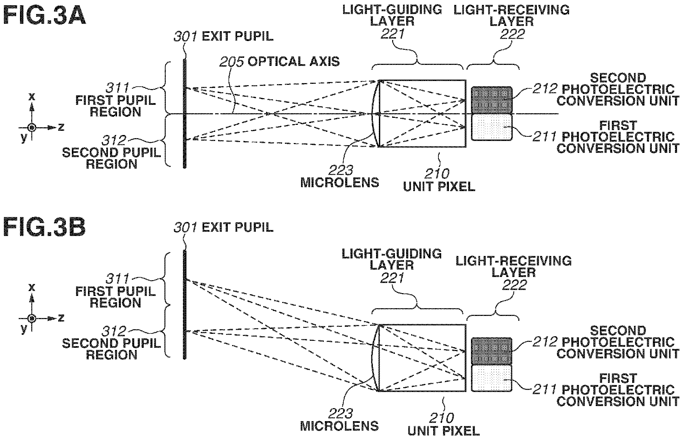

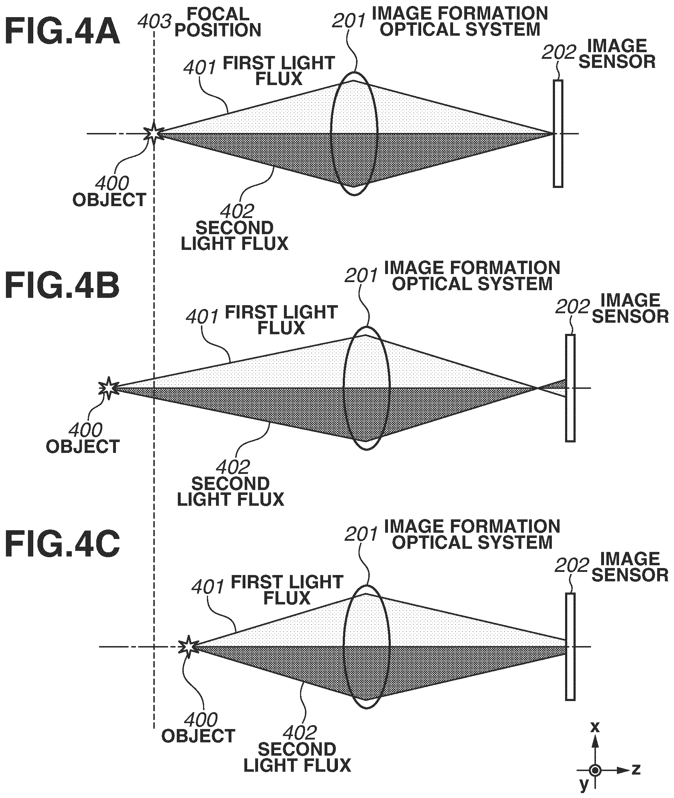

The principle of the pupil division imaging plane phase difference method will be described with reference to Figs. 3A and 3B and Figs. 4A to 4C.

Fig. 3A illustrates a relationship between a unit pixel near a central image height as a representative example of the unit pixels 210 of the image sensor 202 and an exit pupil 301 of the optical system 201. The microlens 223 in each unit pixel 210 is disposed in such a manner that the exit pupil 301 and light-receiving layer 222 corresponding each other have an optically conjugate relationship. As a result, the light flux that has passed through a first pupil region 311 on the exit pupil 301 enters the first photoelectric conversion unit 211. Similarly, the light flux that has passed through a second pupil region 312 enters the second photoelectric conversion unit 212. As illustrated in Fig. 3B, even in the case of a unit pixel at a peripheral image height, although a principal ray is slanted and obliquely enters the microlens 223 and the light-receiving layer 222, the correspondence relationship among the first and second pupil regions 311 and 312, the light fluxes, and the photoelectric conversion units 211 and 212 is the same as that described above. The image sensor 202 is configured by the plurality of unit pixels 210 arranged on the same plane, and the first photoelectric conversion unit 211 of each unit pixel 210 executes photoelectric conversion, and a resultant signal is read out. As a result, a first image from a first point of view is generated. Similarly, the second photoelectric conversion unit 212 of each unit pixel executes photoelectric conversion, and a resultant signal is read out. As a result, a second image from a second point of view is generated. In this way, a parallax image based on a plurality of signals having a parallax that a single image sensor outputs after receiving light fluxes that have passed through different pupil regions of a monocular optical system is acquired.

The parallax amount between a first image signal and a second image signal is based on a defocus amount, which is a deviation amount from a focal point on the image sensor 202. The relationship between the parallax amount and the defocus amount will be described with reference to Figs. 4A to 4C. Figs. 4A to 4C each schematically illustrate the image sensor 202 and the image formation optical system 201. Figs. 4A to 4C each illustrate a first light flux 401 that passes through the first pupil region 311, and a second light flux 402 that passes through the second pupil region 312.

Fig. 4A illustrates a state in which an object 400 is focused and the first light flux 401 and the second light flux 402, which have been emitted from the object 400 at a focal position 403, converge on the image sensor 202. In this state, the relative positional deviation amount, that is, the parallax, between a first image signal formed by the first light flux 401 and a second image signal formed by the second light flux 402 is zero. In Fig. 4B, the object 400 is at a position farther away from the focal position 403. That is, Fig. 4B illustrates a defocused state on the image side in the negative direction along the z-axis. In this state, the relative positional deviation amount along the x-axis between the first image signal formed by the first light flux 401 and the second image signal formed by the second light flux 402 is not zero, but represents a negative value. In Fig. 4C, the object 400 is at a position closer to the image formation optical system 201 than the focal position 403 is. That is, Fig. 4C illustrates a defocused state on the image side in the positive direction along the z-axis. In this case, the relative positional deviation amount between the first image signal formed by the first light flux 401 and the second image signal formed by the second light flux 402 is not zero, but represents a positive value.

As illustrated in Figs. 4A to 4C, the first light flux 401 and the second light flux 402 incident on the image sensor 202 cause a parallax proportional to the defocus amount, and the plus/minus of the parallax changes based on the plus/minus of the defocus amount. Thus, the parallax amount between the first image signal and the second image signal are obtained, and the detected parallax amount is converted into a defocus amount via a predetermined conversion coefficient.

A known technique is used for the detection of the parallax amount. For example, Sum of Squared Difference (SSD) may be used to calculate a correlation value between the first image signal and the second image signal. A minimum cost value is approximated with a function, the parallax amount is detected with sub-pixel accuracy. A parallax is converted into a defocus amount in accordance with Equation 1:

$$d = kr \quad \text{(Equation 1)},$$

where r is a parallax amount, d is a defocus amount, and k is a conversion coefficient. The conversion coefficient k is acquired in advance from calibration, for example, by measuring the parallax amount r and the defocus amount d with respect to a known distance. The detected defocus amount is converted into an object distance in accordance with an image formation equation:

$$1/z = 1/f - 1/d \quad \text{(Equation 2)},$$

where d is a detected defocus amount d, f is a focal length f, and z is an object distance z. In this way, a distance value, which is the first distance information, based on the imaging plane phase difference ranging method is detected.

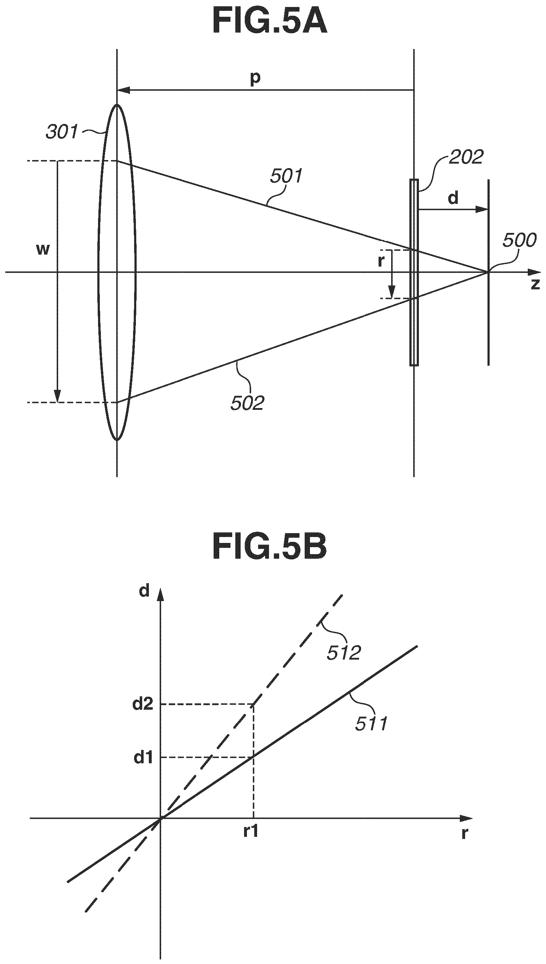

Hereinafter, the ranging error of a ranging camera based on the pupil division imaging plane phase difference method will be described in more detail. Figs. 5A and 5B each illustrate a relationship between a parallax amount and a defocus amount. The parallax between light fluxes is defined by the interval between the chief rays of the light fluxes. Fig. 5A illustrates a chief ray 501 of a first light flux and a chief ray 502 of a second light flux in a certain defocus state. Fig. 5A illustrates a defocus amount d, which is the distance along the optical axis 205 between the image sensor (sensor plane) 202 and a focal point (image plane) 500, and also illustrates a parallax r, which is the distance between the chief ray 501 of the first light flux and the chief ray 502 of the second light flux on the image sensor 202. Fig. 5A also illustrates a baseline length w, which is the distance between the chief ray 501 of the first light flux and the chief ray 502 of the second light flux on the exit pupil 301, and also illustrates an exit pupil distance p, which is the distance between the image sensor 202 and the exit pupil 301. Based on a geometric relationship among these components, Equation 3 is established.

$$(p + d){:}w = d{:}r \quad \text{(Equation 3)}$$

Generally, because the deviation of the defocus amount d is on the order of micrometers (um), and the deviation of the exit pupil distance p is on the order of millimeters (mm), $p + d \approx p$. Therefore, the following relationship is established.

$$d = kr \ (k = p/w) \quad \text{(Equation 4)}$$

As illustrated in Fig. 5B, the parallax r and the defocus amount d are represented by a linear relationship 511 of a slope k expressed by the exit pupil distance p and the baseline length w.

However, the positions of individual lenses constituting an optical system and optical characteristics, such as a refractive index, change as the temperature of the ambient environment changes or due to an external shock. That is, due to a temporal change, the exit pupil distance p and the baseline length w, which is the distance between the chief rays, change from their respective calibration states. As a result, because the value of the slope k changes, the linear relationship 511 changes to a linear relationship 512, resulting in a ranging error. That is, in the calibration state, when a parallax amount r1 is detected, a defocus amount d1 is detected based on the linear relationship 511. However, if an error is caused by a temporal change, a defocus amount d2 is detected based on the linear relationship 512. When the defocus amount d2 is converted into an object distance in accordance with the above-described Equation 2, a distance value different from that in the calibration state, that is, a ranging error, is caused. Because this change in conversion coefficient k due to the temporal change is caused by multiple factors, such as the above-described changes in lens position and optical characteristics, it is difficult to prepare such characteristics changes in advance as a conversion coefficient table as discussed in Japanese Patent Application Laid-Open Publication No. 2014-52335. Thus, in the present embodiment, the first distance information and the second distance information are compared with each other as the ratio between image-side defocus amounts, and correction information is generated.

In the second distance information acquisition processing, the feature point ranging calculation device 103 executes calculation on the image signals acquired by the camera device 101, and acquires second distance information. The feature point ranging calculation device 103 executes the calculation by reading out an image signal S1 acquired by the camera device 101 at time t1 and an image signal S2 acquired by the camera device 101 at time t2 from the image storage memory 203 via the signal transmission unit 204. The relationship between the time t1 and the time t2 is expressed by t1 < t2, which means that the time t1 is a point of time earlier than the time t2. The image signals S1 and S2 are each an image signal obtained by adding the signals read out from the first photoelectric conversion unit 211 and the second photoelectric conversion unit 212. That is, the image signals S1 and S2 are each generated from the light fluxes that have passed through the entire exit pupil region.

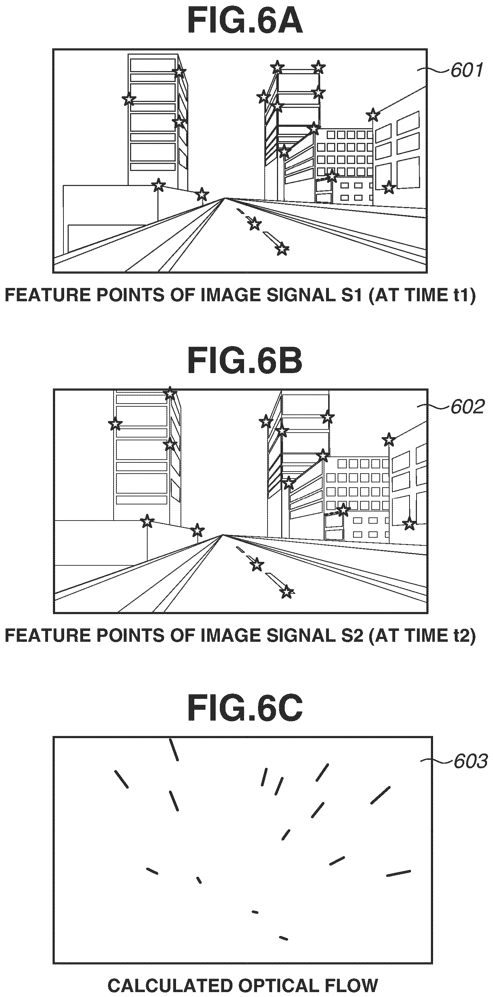

In the second distance information acquisition processing, the second distance information is acquired by using a structure from motion (SfM) method, which is a known technique. Specifically, the distance to an individual object is calculated by calculating feature points in an individual image based on a known technique (for example, scale invariant feature transform (SIFT) feature points) and by calculating an optical flow by associating the calculated feature points with each other based on a known technique. This process will be described with reference to Figs. 6A to 6C. Feature points are calculated by applying a Harris corner detection algorithm, which is a known technique, on the acquired image signals S1 and S2. Fig. 6A illustrates a feature point image 601 calculated from the image signal S1 at the time t1 in which feature points are indicated with stars, and Fig. 6B illustrates a feature point image 602 calculated from the image signal S2 at the time t2 in which feature points are indicated with stars. Fig. 6C illustrates an optical flow 603 calculated by using a Kanade-Lucas-Tomasi (KLT) feature tracking algorithm, which is a known technique for associating the feature points calculated from the image signal S1 and the feature points calculated from the image signal S2 with each other. The algorithms for the calculation of the feature points, features, and optical flow are not limited to the above-described techniques. Features from Accelerated Segment Test (FAST), Binary Robust Independent Elementary Features (BRIEF), Oriented FAST and Rotated BRIEF (ORB), etc., may be alternatively suitably used.

The distance to each object is calculated by using the optical flow 603 in accordance with a known technique. A camera fundamental matrix F is acquired by using an eight-point algorithm in such a manner that the epipolar constraint is satisfied by using the feature points in the feature point image 601 at the time t1, the feature points in the feature point image 602 at the time t2, and the optical flow 603 representing the correspondence relationship between the feature points in the feature point images 601 and 602. At this point, the calculation in accordance with a stable technique may be executed in such a manner that outliers are efficiently excluded in accordance with a random sample consensus (RANSAC) method. The camera fundamental matrix F is decomposed to a camera essential matrix E in accordance with a known technique, to obtain a rotational movement amount R ($\omega$x, $\omega$y, $\omega$z) and a translational movement amount T (tx, ty, tz), which are camera extrinsic parameters, from the camera essential matrix E. The obtained camera extrinsic parameters represent relative deviation of the camera movement amount from the time t1 to the time t2, and are scale-invariant, which means that in particular, the translational movement amount T (tx, ty, tz) is a normalized relative value. By scaling the translational movement amount T, the translational movement amount T (tx, ty, tz) is obtained as the actual movement amount. Specifically, the movement amount tz of the translational movement amount T, the movement amount tz being parallel to the optical axis 205 of the camera, is acquired from the difference between the distance information about the image signal S1 at the time t1, the distance information having been acquired based on the imaging plane phase difference ranging method in the first distance information acquisition processing, and the distance information about the image signal S2 at the time t2. Scaling is also executed on the other components from the acquired scaled actual movement amount tz, so as to acquire the actual translational movement amount T (tx, ty, tz) from the time t1 to the time t2. Then, distance information z is detected from Equation 5 and Equation 6, which represent known relationships.

$$\Delta u = -\omega_y f - \frac{t_x f}{z} + \frac{t_z}{z} u + \omega_x v + \frac{\omega_x}{f} uv - \frac{\omega_y}{f} u^2 \quad \text{(Equation 5)}$$

$$\Delta v = \omega_x f - \frac{t_y f}{z} + \frac{t_z}{z} v + \omega_z u + \frac{\omega_y}{f} uv - \frac{\omega_x}{f} v^2 \quad \text{(Equation 6)}$$

Equations 5 and 6 use (u, v) as the coordinates of an object that is a distance calculation target in an image coordinate system, ($\Delta$u, $\Delta$v) as the optical flow of the object, and z as the distance to the object. In addition, Equations 5 and 6 use the rotational movement amount ($\omega$x, $\omega$y, $\omega$z) and the translational movement amount (tx, ty, tz) of the camera movement amount between the images used in calculation of the optical flow, and also use the camera focal length f.

The feature point ranging calculation device 103 converts the distance between the coordinates of the individual feature points in the feature point image 602 of the image signal S2 at the time t2 acquired as described above on the image and the camera into an image-side defocus amount d by using Equation 2, whereby second distance information is acquired.

The second distance information acquired as described above is calculated from an optical flow in which images, which have been acquired at a much shorter time interval than a time interval that causes a temporal change, are associated with each other. Thus, the second distance information does not include a temporal error amount caused by change in an ambient environment, such as temperature change in ambient environment or an external shock.

The technique for scaling the camera movement amount is not limited to the present technique. It is also desirable to execute scaling by obtaining the camera movement amount from various kinds of measuring instruments, specifically, from an inertial measurement unit (IMU) or a global navigation satellite system (GNSS). In the case of an on-board camera, vehicle speed information or map information may be obtained to execute scaling.

It is also suitable to use bundle adjustment, which is a known technique, for calculating the camera movement amount or the positional relationship between an object and the camera. Including camera intrinsic parameters such as the focal length, inter-variable relationships such as the camera fundamental matrix F and the optical flow 603 can be analytically and collectively calculated in accordance with a nonlinear least squares method such that good consistency is obtained.

It is also desirable to exclude, from the feature points for use in the calculation of the camera movement amount, feature points calculated from objects that are not stationary objects in a world coordinate system to which the imaging device belongs. In the estimation of the camera movement amount in accordance with a known technique, various kinds of parameters are calculated, assuming objects as stationary objects. Thus, if an object is a moving object, an error could be caused. Thus, by excluding feature points calculated from moving objects, the accuracy of the calculation of various kinds of parameters is improved. Whether an object is a moving object is determined, for example, by object classification determination using an image recognition technique. The determination may be executed by comparing the amount of change in distance information acquired over time with the amount of movement of the imaging device as relative values.

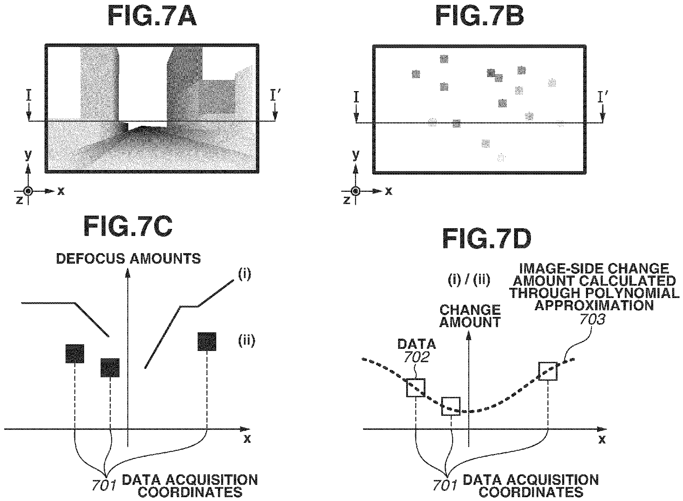

Figs. 7A to 7D are diagrams illustrating processing that is performed by the correction value calculation device 104 and in which the first distance information acquired in the first distance information acquisition processing is compared with the second distance information acquired in the second distance information acquisition processing as the ratio between the image-side defocus amounts, and a correction value is generated.

Fig. 7A illustrates defocus amounts D1 in a case where the first distance information is acquired in the first distance information acquisition processing at the time t2. Fig. 7B illustrates defocus amounts D2 in a case where the second distance information is acquired in the second distance information acquisition processing at the time t2. Because distance information at pixel locations corresponding to the feature points in the feature point image 602 is acquired, Fig. 7B illustrates a group of sparse data corresponding to the coordinates of the feature points in the feature point image 602. Fig. 7C illustrates the image-side defocus amounts along a line I-I' in Figs. 7A and 7B. In Fig. 7C, discontinuous lines (i) represent the defocus amounts D1, and point data (ii) represents the defocus amounts D2. The defocus amounts D1 include an error due to a temporal change of the camera device 101, and correspond to the linear relationship 512 in Fig. 5B. On the other hand, the defocus amounts D2 correspond to the linear relationship 511 in Fig. 5B, which is not affected by the temporal change of the camera device 101. Thus, as seen from the ratio between these defocus amounts D1 and D2, the ratio corresponds to the change amount of the slope coefficient k affected by the temporal change. Because the linear relationship 511 is expressed by $d1 = k1 \cdot r1$ and the linear relationship 512 is expressed by $d2 = k2.r1$, whereby $d1/d2 = k1/k2$ (the change amount of the slope coefficient k). Fig. 7D illustrates the change amount = (i)/(ii), which is obtained by dividing (i) representing the defocus amount D1 in Fig. 7C by (ii) representing the defocus amount D2. Ratio data 702 representing the change amount = (i)/(ii) is actually acquired on data acquisition coordinates 701 illustrated in Fig. 7D, which correspond to the coordinates of the feature points in the feature point image 602. In contrast, the change amount affected by the temporal change ranges the entire angle of view. Considering that the optical characteristics continuously change, the slope change amount between angles of view, that is, between pixels, smoothly changes. Thus, the gap between angles of view is interpolated by executing fitting with the ratio data 702 acquired on the individual data acquisition coordinates 701 through polynomial approximation. A change amount 703 obtained through the polynomial approximation as described above is illustrated by a dashed line in Fig. 7D. Although Fig. 7D illustrates the change amount obtained through one-dimensional polynomial approximation along the line I-I' for ease of description, the individual actual image-side change amount is two-dimensional data on the xy plane. Thus, the change amount is estimated by using the discrete difference data acquired with respect to the angles of view and by executing surface fitting through polynomial approximation on the xy plane. The approximate surface data, which is the calculated change amount, will be referred to as a correction value kc. By using this correction value kc, the above-described conversion coefficient k is corrected, so as to calculate a corrected conversion coefficient k'.

$$k' = k/kc \quad \text{(Equation 7)}$$

By using the corrected conversion coefficient k' and parallax r, the correction value calculation device 104 corrects the defocus amount and obtains a corrected defocus amount d'.

$$d' = k'r \quad \text{(Equation 8)}$$

By acquiring the object distance z in accordance with Equation 2 using the defocus amount d' corrected as described above, a distance value less affected by the ranging error due to a temporal change is calculated.

Figs. 8A to 8D each illustrate a calculation flow according to the present embodiment. Fig. 8A illustrates an overall flow. The flowchart is realized by causing a central processing unit (CPU) to execute a control program. In step S810, the first distance information acquisition processing is executed based on a parallax image acquired by the camera device 101. As illustrated in Fig. 8B, in the first distance information acquisition processing in step S810, preprocessing in step S811 is executed in which luminance correction and noise reduction are executed. In step S812, parallax amount detection processing is executed in which the parallax is detected in accordance with the above-described technique. In step S813, distance conversion processing is executed in which the defocus amount d and the object distance z are calculated as described. Next, in the overall flow in Fig. 8A, the second distance information acquisition processing in step S820 is executed based on an image at the time t1 and an image at the time t2, the images having been acquired by the camera device 101. As illustrated in Fig. 8C, in the second distance information acquisition processing in step S820, optical flow calculation processing in step S821 is executed in which detection and association of the feature points are executed as described above to calculate an optical flow. In step S822, SfM processing is executed in which the object distance per feature point is calculated from the optical flow and the camera movement amount, whereby the second distance information is calculated. Next, in the overall flow in Fig. 8A, correction information calculation processing in step S830 is executed in which a correction value is calculated based on the calculated first distance information and the calculated second distance information. As illustrated in Fig. 8D, in step S831, change amount calculation processing is executed in which the ratio between the defocus amounts is calculated as the change amount as described above. In step S832, correction information calculation processing is executed in which surface fitting is executed, and a correction value k' is calculated by correcting the conversion coefficient k obtained at the calibration. In step S840 of the overall flow in Fig. 8A, correction processing is executed in which correction processing as expressed by Equation 8 is executed based on the correction value k'.

As described above, the first distance information based on the imaging plane phase difference ranging method and the second distance information based on the SfM method are compared with each other as the ratio between the image-side defocus amounts, a correction value is calculated, and the defocus amount is corrected. The object distance is obtained by using the corrected defocus amount, so that a distance acquisition apparatus achieving a reduced ranging error due to a temporal change is provided.

The technique that is used by the feature point ranging calculation device 103 is not limited to the SfM technique described in the present embodiment. As a ranging unit that is not affected by a ranging error due to a temporal change of the camera device 101, a light detection and ranging (LiDAR) or millimeter-wave radar that acquires distance information based on reflection intensity of an emitted electromagnetic wave may be used. In this case, the movement amount of the camera device 101 may be detected by using an IMU or the like, and in a case where the movement amount is small, which causes the error in optical flow to be large, the sensor for obtaining the second distance information may be switched to and select a LiDAR or millimeter-wave radar. The feature point ranging calculation device 103 may calculate the object distance from an image obtained from a camera device other than the camera device 101.

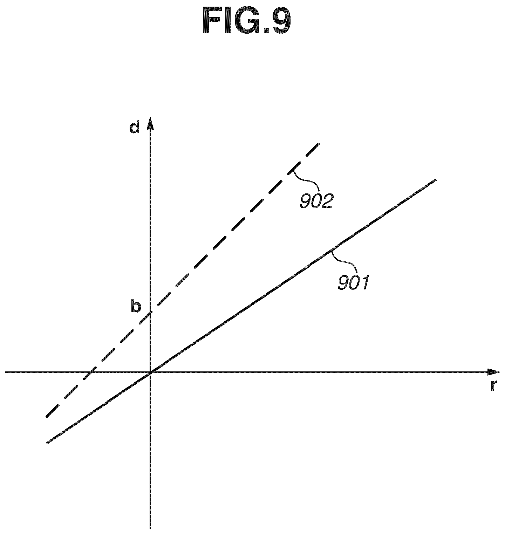

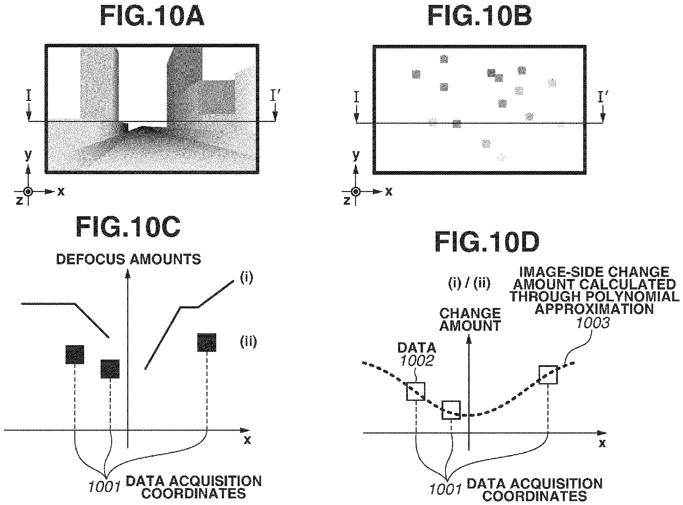

A second embodiment will be described. The following description will be given of a correction method executed in a case where an error due to a temporal change includes not only a slope component but also an offset component in the relationship between the parallax and the defocus amount. Fig. 9 illustrates a relationship between the parallax r and the defocus amount d when there is also an offset component error. A linear relationship 901 is obtained at calibration, and a linear relationship 902 is obtained in a case where the impact of a temporal change changes the conversion coefficient k, which causes a ranging error due to the slope component occurs, and a ranging error b due to the offset component also occurs. The offset component b corresponds to change in focal point on the image sensor, the change having been caused by change in lens location or optical characteristics due to the impact of the temporal change. That is, the offset component b corresponds to an image surface curvature amount. A method for calculating a correction value for the offset component b will be described. In the same way as described above, the first distance information and second distance information are acquired and compared with each other as a difference value between the image-side defocus amounts, and a correction value is calculated. Figs. 10A to 10D illustrate this process.

Fig. 10A illustrates defocus amounts D1 in a case where the first distance information is acquired in the first distance information acquisition processing at the time t2. Fig. 10B illustrates defocus amounts D2 in a case where the second distance information is acquired in the second distance information acquisition processing at the time t2. Fig. 10C illustrates the defocus amounts D1 and D2 as the image-side defocus amounts along the line I-I' in Figs. 10A and 10B in the same way as described above. In Fig. 10C, discontinuous lines (i) represent the defocus amounts D1, and point data (ii) represents the defocus amounts D2. The defocus amounts D1 include an error due to a temporal change of the camera device 101, and correspond to the linear relationship 902 in Fig. 9. On the other hand, the defocus amounts D2 correspond to the linear relationship 901 in Fig. 9, which is not affected by the temporal change of the camera device 101. Thus, when the difference between these defocus amounts D1 and D2 is obtained, the difference corresponds to an error amount b of the offset component affected by the temporal change. However, the linear relationship 902 does not always match the error amount b because there is also an error of the slope component, depending on the object distance, that is, the values of the defocus amounts. This will be described below. Fig. 10D illustrates the difference value = (i) - (ii), which is obtained by subtracting (ii) representing the defocus amounts D2 from (i) representing the defocus amounts D1 in Fig. 10C. Difference data 1002 of the difference value = (i) - (ii) is actually obtainable on discrete data acquisition coordinates 1001 in the same way as described above. A change amount 1003 obtained by executing fitting through the polynomial approximation as described above is illustrated by a dashed line in Fig. 10D. In addition, in the same way as described above, the in-plane change amount is estimated by executing surface fitting through the polynomial approximation on the xy plane. The approximate surface data, which is the calculated change amount, will be referred to as a correction value bc. By using this correction value bc, the defocus amount is corrected, so as to calculate a defocus amount d" from a parallax r having a reduced offset component error amount.

$$d'' = kr - bc \quad \text{(Equation 9)}$$

In the relationship between the parallax r and the defocus amount d in Fig. 9, there is the slope component error in the linear relationship 902. In the present embodiment, the slope component error described in the first embodiment and the offset component error are alternately corrected in iteration processing, whereby these two kinds of errors are reduced.

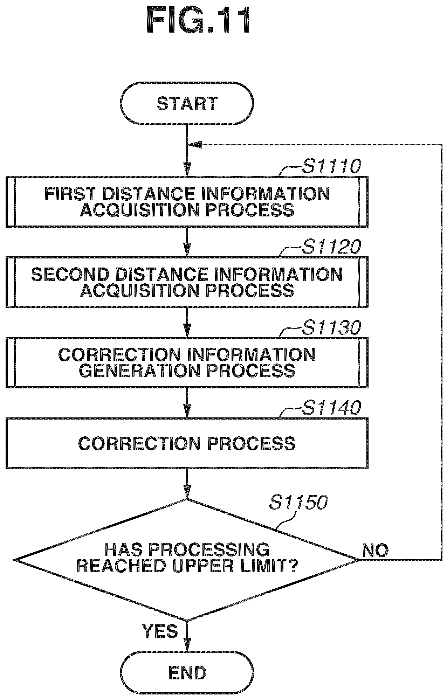

Fig. 11 illustrates a processing flow. In a first distance information acquisition processing in step S1110 and a first distance information acquisition processing in step S1120, the first distance information and the second distance information are acquired in the same way as described above. In correction information generation processing in step S1130, the correction value kc of the slope component is calculated in the same way as described above. In correction processing in step S1140, the slope component is corrected in the same way as described above. In a determination and selection processing in step S1150, whether the correction of the ranging error is sufficient is determined. In step S1150, whether the number of times of the execution of the correction processing has reached a preset upper limit or whether a preset upper processing time limit has been reached is determined. In a case where the upper limit has not been reached (NO in step S1150), the offset component error b is selected as the correction target, and the operation returns to the first distance information acquisition processing in step S1110. Next, as described above, in the correction information generation processing in step S1130, the correction value be of the offset component is calculated as described above. In the correction processing in step S1140, the offset component is corrected in the same way as described above. In a case where in the determination and selection processing in step S1150, the upper limit has not been reached (NO in step S1150), the slope component error k is selected again as the correction target, and the operation returns to the first distance information acquisition processing in step S1110. This correction is iterated a plurality of times until it is determined that the upper limit has been reached in determination and selection processing in step S1150. In this way, the iteration processing reduces the two kinds of error components. Thus, a distance acquisition apparatus achieving a reduced ranging error due to a temporal change even in a case where the offset component error is present is provided.

In the determination and selection processing in step S1150, whether the correction is sufficient is determined based on a preset number of times of the execution of the processing or a preset upper time limit. However, whether the correction is sufficient may be determined based on whether the calculated range value is smaller than a distance error threshold that is set in advance based on known calibration targets. Alternatively, the correction processing may be ended in a case where the difference between a defocus amount obtained in the current correction and a defocus amount obtained in the previous correction is a predetermined value or less (has approximately converged).

It is desirable that the iteration processing begins with the slope component k as the first correction target in a case where the value of k is large, in a case where the distance values at the data acquisition coordinates 1001 are out of focus, or in a case where the offset component error b is small. This is because the impact of the slope component error is large in these cases. In a case where the slope k is large, the baseline length is also long. Thus, in a case where the baseline length of the designed camera is larger than normal, the correction of the slope k is executed first, whereby convergence is achieved more quickly.

It is desirable to begin the iteration processing with the offset component b as the first correction target in a case where the value of k is small, in a case where the distance values at the data acquisition coordinates 1001 are nearly in focus, or in a case where the offset component error b is large. This is because the impact of the offset component error is large in these cases.

In a case of the camera, the focus of which easily changes with the temperature, the correction of the offset component is executed first, whereby convergence is achieved more quickly.

(Basic configuration, Overall configuration)

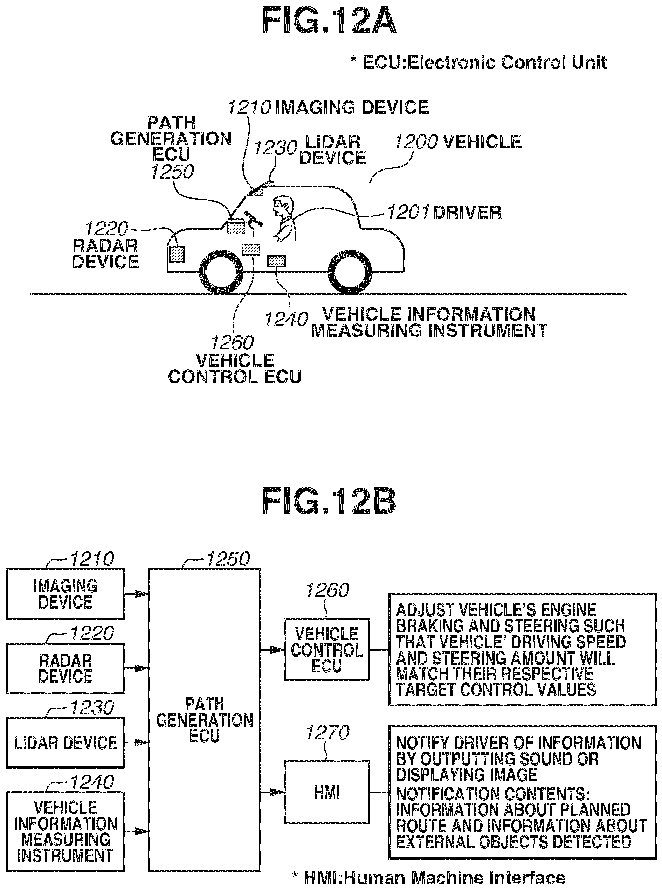

Fig. 12A schematically illustrates a configuration of an apparatus according to the embodiments mounted in a vehicle 1200, which is a moving body. Fig. 12B is a block diagram of the apparatus. The moving body is not limited to an automobile, but may be any one of various kinds of public transportation systems, such as trains and airplanes or any one of various kinds of robots such as small mobilities or automatic guided vehicles (AGVs).

In Fig. 12A, the vehicle 1200 includes an imaging device 1210, a millimeter-wave radar device 1220, a LiDAR device 1230, vehicle information measuring instruments 1240, a path generation electronic control unit (ECU) 1250, and a vehicle control ECU 1260. A configuration including a CPU and a memory storing a calculation processing program may be adopted as another form of the path generation ECU 1250 and the vehicle control ECU 1260. The imaging device 1210 is, for example, the camera device 101 illustrated in Fig. 2A.

The imaging device 1210 that acquires first distance information captures an image of a surrounding environment including the road on which the vehicle 1200 is driving, generates image information representing the captured image and distance image information including information representing the distance to an object per pixel, and outputs these items of information to the path generation ECU 1250. The imaging device 1210 is disposed near the upper edge of the windshield of the vehicle 1200 as illustrated in Fig. 12A, and captures an image in an area of a predetermined angular range (hereinafter, an imaging angle of view) in the front direction of the vehicle 1200.

The information representing the distance to an object may be any information that is convertible into a distance to an object within the imaging angle of view from the imaging device 1210. The information may be any information that is convertible by using a predetermined reference table or a predetermined conversion coefficient and a conversion formula. For example, a distance value may be allocated to a predetermined integer value, and the resultant value may be output to the path generation ECU 1250. Information that can be converted into optically conjugate distance value that is convertible into a distance to an object (the distance from the image sensor to the conjugate point (a so-called defocus amount) or the distance from the optical system to the conjugate point (distance from the image-side principal point to the conjugate point)) may be output to the path generation ECU 1250.

The vehicle 1200 includes a driving speed measuring instrument, a steering angle measuring instrument, and an angular rate measuring instrument, as the vehicle information measuring instruments 1240. The driving speed measuring instrument is a measuring instrument that detects the driving speed of the vehicle 1200. The steering angle measuring instrument is a measuring instrument that detects the steering angle of the vehicle 1200. The angular rate measuring instrument is a measuring instrument that detects the angular rate of the vehicle 1200 in the turning direction thereof.

The path generation ECU 1250 is constituted by using a logic circuit. The path generation ECU 1250 generates target path information about at least one of a target driving trajectory and a target driving speed of the vehicle 1200 based on the object distance information obtained from the image information from the imaging device 1210, and sequentially outputs the target path information to the vehicle control ECU 1260. The path generation ECU 1250 may additionally use the measurement signals from the vehicle information measuring instruments 1240, distance information from the radar device 1220, and distance information from the LiDAR device 1230. The path generation ECU 1250 outputs a control value for controlling the vehicle 1200 in such a manner that the distance between an obstacle that hinders the movement of the vehicle 1200 and the vehicle 1200 will be a predetermined distance or more, whereby the movement of the vehicle 1200 is controlled. In a case where the vehicle 1200 includes a human machine interface (HMI) 1270 that notifies a driver 1201 of information by displaying an image or outputting a sound, the driver 1201 may be notified of the target path information generated by the path generation ECU 1250 via the HMI 1270.

By applying the distance correction according to the present embodiment to the imaging device 1210, the accuracy of the output distance information is improved, the accuracy of the target path information that is output from the path generation ECU 1250 is improved, and safer vehicle driving control is achieved.

The second distance information according to the present embodiment may be acquired by an SfM method by the imaging device 1210 or SfM using any one of the radar device 1220, the LiDAR device 1230, and the vehicle information measuring instruments 1240.

The present disclosure can also be implemented by executing the following processing. Software (program) for implementing the functions of the embodiments is supplied to a system or apparatus via a network or various storage media, and the computer (or the CPU or MPU) of the system or apparatus reads and executes the program. The program may be recorded in a computer-readable recording medium and provided from the computer-readable recording medium.

According to the present invention, a temporal ranging error caused by the impact of an ambient environment, such as heat or a shock, in a distance measurement apparatus that acquires distance information from captured images is reduced.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc™ (BD)), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

**Claims**

1. An information processing apparatus (100) comprising:

   first acquisition means (102) configured to acquire first distance information including an error about a distance between imaging means and an object via an optical system;
   second acquisition means (103) configured to acquire second distance information including an error that is less than the error included in the first distance information;
   generation means configured to generate (104) a first correction value to correct a first defocus amount, the first correction value being based on a ratio between the first defocus amount corresponding to deviation along an optical axis between a sensor plane and an image plane, the first defocus amount having been used for acquisition of the first distance information, and a second defocus amount used for acquisition of the second distance information; and

calculation means (104) configured to calculate the distance between the imaging means and the object by using the first defocus amount corrected with the first correction value.

2. The information processing apparatus according to claim 1,

wherein the generation means is further configured to generate a second correction value to correct the first defocus amount, the second correction value being based on a difference between the first defocus amount and the second defocus amount, and

wherein the calculation means is configured to calculate the distance between the imaging means and the object by using the first defocus amount corrected by using the first correction value and the second correction value.

3. The information processing apparatus according to claim 1 or claim 2, wherein the first acquisition means is configured to acquire the first distance information, based on a plurality of signals having a parallax that has been output from a single image sensor by receiving light fluxes passed through different pupil regions of a monocular optical system.

4. The information processing apparatus according to any one of claims 1 to 3, wherein the second acquisition means is configured to uses a Structure from Motion (SfM) technique.

5. The information processing apparatus according to any one of claims 1 to 4, wherein the second acquisition means is configured to uses a technique for acquiring distance information based on reflection intensity of an emitted electromagnetic wave.

6. The information processing apparatus according to any one of claims 1 to 5, wherein the second acquisition means is configured to select a technique to be used, based on a movement amount of the imaging means.

7. The information processing apparatus according to any one of claims 2 to 6, when dependent upon claim 2,

wherein the calculation means is configured to correct the first defocus amount a plurality of times by using the first correction value and the second correction value, and

wherein the first defocus amount is corrected by using the first correction value before using the second correction value.

8. The information processing apparatus according to any one of claims 2 to 6, when dependent upon claim 2,

wherein the calculation means is configured to correct the first defocus amount a plurality of times by using the first correction value and the second correction value, and

wherein the first defocus amount is corrected by using the second correction value before using the first correction value.

9. A moving apparatus comprising an information processing apparatus according to any one of claims 1 to 8.

10. The moving apparatus according to claim 9, wherein the information processing apparatus is mounted in a moving body of the moving apparatus.

11. The moving apparatus according to claim 9 or claim 10, wherein the moving apparatus is a vehicle.

12. An information processing method comprising:

acquiring, as a first acquiring step, first distance information including an error about a distance between imaging means and an object via an optical system;

acquiring, as a second acquiring step, second distance information including an error that is less than the error included in the first distance information;

generating a first correction value to correct a first defocus amount, the first correction value being based on a ratio between the first defocus amount corresponding to deviation along an optical axis between a sensor plane and an image plane, the first defocus amount having been used for acquisition of the first distance information, and a second defocus amount used for acquisition of the second distance information; and
calculating the distance between the imaging means and the object by using the first defocus amount corrected with the first correction value.

13. A non-transitory computer-readable storage medium storing a program for causing a computer to function as each means of the information processing apparatus according to any one of claims 1 to 8.

14. A computer program comprising instructions which, when executed by a computer, cause the computer to carry out the method of claim 12.

15. A non-transitory computer-readable storage medium storing a computer program according to claim 14.

# FIG.1

100

DISTANCE ACQUISITION APPARATUS

101 — CAMERA DEVICE

102 — STEREO RANGING CALCULATION DEVICE

103 — FEATURE POINT RANGING CALCULATION DEVICE

104 — CORRECTION VALUE CALCULATION DEVICE

# FIG.2A

*101* CAMERA DEVICE

OPTICAL AXIS *205*

*202* IMAGE SENSOR

*204* SIGNAL TRANSMISSION UNIT

*203* IMAGE STORAGE MEMORY

*201* IMAGE FORMATION OPTICAL SYSTEM

x
z
y

# FIG.2B

*202* IMAGE SENSOR

FIRST *211* PHOTOELECTRIC CONVERSION UNIT

SECOND *212* PHOTOELECTRIC CONVERSION UNIT

I — I'

*210* UNIT PIXEL

y
z
x

# FIG.2C

*210* UNIT PIXEL

*223* MICROLENS

LIGHT-GUIDING LAYER *221*

LIGHT-RECEIVING LAYER *222*

y
x
z

*212* SECOND PHOTOELECTRIC CONVERSION UNIT

*211* FIRST PHOTOELECTRIC CONVERSION UNIT

**FIG.3A**

LIGHT-GUIDING LAYER 221
LIGHT-RECEIVING LAYER 222
301 EXIT PUPIL
205 OPTICAL AXIS
311 FIRST PUPIL REGION
312 SECOND PUPIL REGION
212 SECOND PHOTOELECTRIC CONVERSION UNIT
211 FIRST PHOTOELECTRIC CONVERSION UNIT
223 MICROLENS
210 UNIT PIXEL

**FIG.3B**

301 EXIT PUPIL
LIGHT-GUIDING LAYER 221
LIGHT-RECEIVING LAYER 222
311 FIRST PUPIL REGION
312 SECOND PUPIL REGION
212 SECOND PHOTOELECTRIC CONVERSION UNIT
211 FIRST PHOTOELECTRIC CONVERSION UNIT
223 MICROLENS
210 UNIT PIXEL

15

**FIG.4A**

403 FOCAL POSITION

201 IMAGE FORMATION OPTICAL SYSTEM

401 FIRST LIGHT FLUX

202 IMAGE SENSOR

400 OBJECT

402 SECOND LIGHT FLUX

**FIG.4B**

201 IMAGE FORMATION OPTICAL SYSTEM

401 FIRST LIGHT FLUX

202 IMAGE SENSOR

400 OBJECT

402 SECOND LIGHT FLUX

**FIG.4C**

201 IMAGE FORMATION OPTICAL SYSTEM

401 FIRST LIGHT FLUX

202 IMAGE SENSOR

400 OBJECT

402 SECOND LIGHT FLUX

x
y z

# FIG.5A

# FIG.5B

# FIG.6A

601

**FEATURE POINTS OF IMAGE SIGNAL S1 (AT TIME t1)**

# FIG.6B

602

**FEATURE POINTS OF IMAGE SIGNAL S2 (AT TIME t2)**

# FIG.6C

603

**CALCULATED OPTICAL FLOW**

# FIG.7A

# FIG.7B

# FIG.7C

DEFOCUS AMOUNTS

(i)

(ii)

x

701 DATA ACQUISITION COORDINATES

# FIG.7D

(i) / (ii)

IMAGE-SIDE CHANGE AMOUNT CALCULATED THROUGH POLYNOMIAL APPROXIMATION

703

CHANGE AMOUNT

DATA
702

x

701 DATA ACQUISITION COORDINATES

# FIG.8A

START

↓ *S810*

FIRST DISTANCE
INFORMATION
ACQUISITION PROCESS

↓ *S820*

SECOND DISTANCE
INFORMATION
ACQUISITION PROCESS

↓ *S830*

CORRECTION
INFORMATION
GENERATION PROCESS

↓ *S840*

CORRECTION
PROCESS

↓

END

# FIG.8B

S810

↓ *S811*

PREPROCESSING

↓ *S812*

PARALLAX AMOUNT
DETECTION PROCESS

↓ *S813*

DISTANCE
CONVERSION PROCESS

↓

END

# FIG.8C

S820

↓ *S821*

OPTICAL FLOW
CALCULATION PROCESS

↓ *S822*

SfM PROCESS

↓

END

# FIG.8D

S830

↓ *S831*

CHANGE AMOUNT
CALCULATION PROCESS

↓ *S832*

CORRECTION INFORMATION
CALCULATION PROCESS

↓

END

# FIG.9

# FIG.10A

# FIG.10B

# FIG.10C

DEFOCUS AMOUNTS

(i)

(ii)

x

*1001* DATA ACQUISITION COORDINATES

# FIG.10D

(i) / (ii)

IMAGE-SIDE CHANGE AMOUNT CALCULATED THROUGH POLYNOMIAL APPROXIMATION
*1003*

CHANGE AMOUNT

DATA
*1002*

x

*1001* DATA ACQUISITION COORDINATES

# FIG.11

START

S1110

FIRST DISTANCE INFORMATION
ACQUISITION PROCESS

S1120

SECOND DISTANCE INFORMATION
ACQUISITION PROCESS

S1130

CORRECTION INFORMATION
GENERATION PROCESS

S1140

CORRECTION PROCESS

S1150

HAS PROCESSING
REACHED UPPER LIMIT?

NO

YES

END

# FIG.12A

* ECU:Electronic Control Unit

*1210* IMAGING DEVICE

PATH GENERATION ECU *1250*

*1230* LiDAR DEVICE

*1200* VEHICLE

*1201* DRIVER

*1220* RADAR DEVICE

*1240* VEHICLE INFORMATION MEASURING INSTRUMENT

*1260* VEHICLE CONTROL ECU

# FIG.12B

*1210* IMAGING DEVICE

*1220* RADAR DEVICE

*1230* LiDAR DEVICE

*1240* VEHICLE INFORMATION MEASURING INSTRUMENT

*1250* PATH GENERATION ECU

*1260* VEHICLE CONTROL ECU

ADJUST VEHICLE'S ENGINE BRAKING AND STEERING SUCH THAT VEHICLE' DRIVING SPEED AND STEERING AMOUNT WILL MATCH THEIR RESPECTIVE TARGET CONTROL VALUES

*1270* HMI

NOTIFY DRIVER OF INFORMATION BY OUTPUTTING SOUND OR DISPLAYING IMAGE
NOTIFICATION CONTENTS: INFORMATION ABOUT PLANNED ROUTE AND INFORMATION ABOUT EXTERNAL OBJECTS DETECTED

* HMI:Human Machine Interface

Europäisches
Patentamt

European
Patent Office

Office européen
des brevets

# EUROPEAN SEARCH REPORT

**Application Number**

EP 25 15 9633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 067 813 A1 (CANON KK [JP]) 5 October 2022 (2022-10-05) * paragraph [0027] * * paragraph [0030] - paragraph [0031] * * paragraph [0048] * * paragraph [0050] - paragraph [0051] * * paragraph [0055] - paragraph [0057] * * paragraph [0060] * * paragraph [0068] - paragraph [0077] * * paragraph [0080] - paragraph [0082] * * paragraph [0088] - paragraph [0089] * * paragraph [0095] - paragraph [0096] * * paragraph [0102] - paragraph [0103] * * paragraph [0119] - paragraph [0122] * * paragraph [0155] * * paragraph [0168] - paragraph [0171] * ----- | 1-15 | INV. G01C3/08 G01C3/12 G01C3/14 G01S17/86 G06T7/246 |

| | TECHNICAL FIELDS SEARCHED (IPC) |
|---|---|
| | G01C G06T G01S |

The present search report has been drawn up for all claims

| Place of search | Date of completion of the search | Examiner |
|---|---|---|
| The Hague | 18 July 2025 | Zimmermann, Katrin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9633

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | Publication date | Patent family member(s) | Publication date |
|---|---|---|---|
| EP 4067813 A1 | 05-10-2022 | EP 4067813 A1 | 05-10-2022 |
| | | JP 2022154179 A | 13-10-2022 |
| | | US 2022321871 A1 | 06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014052335 A